(19) **Europäisches Patentamt / European Patent Office / Office européen des brevets**

(11) **EP 3 771 992 A1**

(12) **EUROPEAN PATENT APPLICATION**

(43) Date of publication:
**03.02.2021 Bulletin 2021/05**

(51) Int Cl.:
***G06F 16/25*** (2019.01)

(21) Application number: **20188585.2**

(22) Date of filing: **30.07.2020**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **30.07.2019 FR 1908662**

(71) Applicant: **Amadeus S.A.S.**
**06410 Biot (FR)**

(72) Inventors:
- **LORI, Stefano**
 **06410 Biot (FR)**
- **SOLIMANDO, Alessandro**
 **06410 Biot (FR)**
- **LOBELLO, Frederic**
 **06410 Biot (FR)**

(74) Representative: **Samson & Partner Patentanwälte mbB**
**Widenmayerstraße 6**
**80538 München (DE)**

(54) **METHODS AND SYSTEMS FOR DATA INGESTION IN LARGE-SCALE DATABASES**

(57) A method of data ingestion for use in a large-scale database system comprises retrieving (402) a plurality of document objects from a large-scale data store (304). A corresponding plurality of feature vector representations (406) of contents of the document objects is computed (404). The feature vector representations are grouped (412) according to an unsupervised learning approach to identify one or more clusters (414) of similar documents. For each identified cluster, at least one strategy (418, 420) for transformation and/or storage of associated data within a serving data store (226) is generated (416) and stored (422). When an event comprising the arrival of one or more new document objects (504) into the large-scale data store is detected, a corresponding one or more feature vector representations (508) of contents of the new document objects is computed (506). The new document objects are classified (510) as associated with one of the identified clusters (512) according to the unsupervised learning approach. One of the stored strategies for transformation and/or storage of data content of the new document objects is retrieved (514) based upon the classification. The retrieved strategy is executed (518) for transformation and/or storage of data content of the new document objects within the serving data store.

Figure 2

**Description**

The present invention relates generally to improved data processing systems and methods, and more specifically to mechanisms for automated data ingestion in large-scale databases.

Until relatively recently, much data storage and analysis has been conducted using relational databases and tools such as Structured Query Language (SQL). However, this conventional approach has been challenged by the new demands created by the emergence of so-called 'big data' which is a term-of-art that combines two complementary concepts. Firstly, big data relates to data sets that are too large and/or complex to handled using conventional technologies such as relational databases. Secondly, big data is commonly used to refer to modern techniques that are used to extract value, e.g. through predictive analytics, from complex data sets using specialised technologies such as Hadoop® or Apache Spark®. Relational databases and associated analytic tools are designed to interact with structured information. By contrast, much of the information comprising big data repositories is unstructured or semi-structured. For example, modern enterprise applications commonly generate and transmit data in the form of documents encoded using Extensible Markup Language (XML) or JavaScript Object Notation (JSON). Such data sources have proven demanding for earlier generations of analytic tools to digest, due to their often very large size and semi-structured nature. In short, big data can often be characterised, and distinguished from conventional data sources, as being comprised of unstructured or semi-structured information that is received continuously, and in very high volumes.

In response to the challenges of big data, new technologies and programming practices have been developed to support distributed computing on massive data sets. One common example of a big data storage technology is the Hadoop® Distributed File System (HDFS), which provides for storage of enormous amounts of both structured and unstructured data. A common example of a data processing technology, able to execute operations against data stored in HDFS and/or other storage systems, is Apache Spark®, which enables application development in a broad range of programming languages, including Java, Scala, Python, and R. While HDFS and Spark® are not the only technologies available for storage, management, and processing of big data - and both are able work in conjunction with a range of other technologies - they have benefited from open-source development and distribution models, and have become widely accepted and deployed.

However, technologies such as HDFS and Spark®, in and of themselves, do not address all of the challenges of big data. A key element of any practical big data system is data ingestion, which commonly involves steps of extraction (i.e. retrieving or receiving data from its original source), transformation (i.e. processing, cleaning, and normalising data to ensure that it is in a form suitable for further processing and/or analysis), and loading the resulting data into storage from which further processing and analysis can take place. An additional consideration is that it is not always possible to transition existing database systems onto big data platforms, such as Apache Spark®, due to the requirement to maintain compatibility with deployed legacy applications and services.

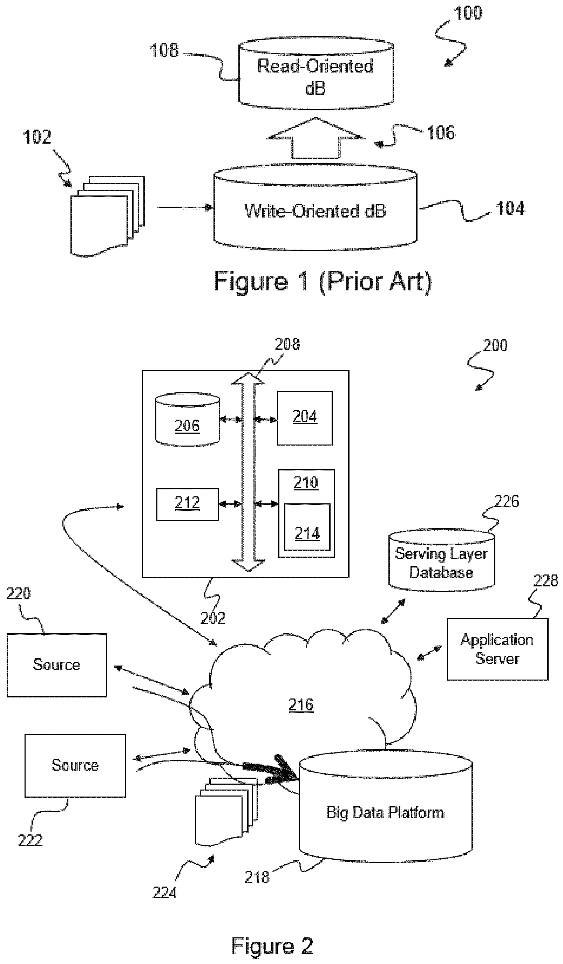

Figure 1 is a block diagram 100 of a prior art system and process for ingestion of structured data 102, which is initially received and stored in a write-oriented relational database 104. The data is then transformed 106, and the resulting data stored in a read-oriented relational database 108, from which it may be retrieved and analysed, e.g. using tools such as SQL, for use in other applications. Historically, data transformations 106 were developed manually by human operators. For example, a global schema could be designed for the read-oriented database 108, and programmers assigned to develop scripts mapping structured incoming data 102 into the global schema. As the volume and variety of data sources grows, however, it is desirable to introduce layers of automation to the ingestion process. For example, manual scripting may be replaced with a semi-automated approach in which information defining the mappings of incoming data 102 to the global schema is stored in tables, spreadsheets, or other configuration files, whereby the required scripts or other forms of data transformations may be generated automatically. Even so, while defining a large number of tables or configuration files is an improvement on developing and maintaining a corresponding number of ingestion scripts, it is not a scalable or manageable task in the context of modern big data systems, which are required to handle huge volumes and varieties of structured, semi-structured, and unstructured data.

A particular issue that arises in such systems is the need to manage ingestion of data from new sources, new data from existing sources, and data from existing sources that may change in content and/or format over time. In these circumstances, it would be desirable to automatically infer information about data being ingested, and determine suitable actions for handling incoming data, such that the need for manual intervention in data ingestion and transformation is minimised. Furthermore, it would be desirable to provide systems and methods for data ingestion that are able to deliver at least some of the advantages of modern big data platforms for analysis and processing of incoming data, while retaining compatibility with legacy applications and services. Embodiments of the present invention are directed towards satisfaction of these needs.

In one aspect, the present invention provides a method of data ingestion for use in a large-scale database system which comprises steps of:

retrieving a plurality of document objects from a large-scale data store;

computing a corresponding plurality of feature vector representations of contents of the document objects;

grouping the feature vector representations according to an unsupervised learning approach to identify one or more clusters of similar documents;

for each identified cluster, generating and storing at least one strategy for transformation and/or storage of associated data within a serving data store;

detecting an event comprising the arrival of one or more new document objects into the large-scale data store;

computing a corresponding one or more feature vector representations of contents of the new document objects;

classifying the new document objects as associated with one of the identified clusters according to the unsupervised learning approach;

retrieving one of the stored strategies for transformation and/or storage of data content of the new document objects based upon the classification; and

executing the retrieved strategy for transformation and/or storage of data content of the new document objects within the serving data store.

Advantageously, the steps of computing feature vector representations of document objects, identifying clusters of similar documents, generating strategies for transformation and/or storage of associated data, and classifying new document objects, may be implemented within a distributed computing system that is optimised for processing of big data. Furthermore, the step of executing the retrieved strategy for transformation and/or storage of data content of the new document objects within the serving data store may be implemented within a legacy database system. In this way, embodiments of the invention are able to utilise the data processing and analysis capabilities of modern distributed computing systems to analyse and classify data entering the database system, and to employ insights obtained from this analysis within the legacy database system.

In embodiments of the invention, each one of the plurality of document objects may comprise aggregated data extracted from a column of tabular data. Advantageously, constructing document objects from columns of tabular data enables processing of unstructured and semi-structured data, in addition to structured data. For example, document objects may be constructed from any columns present in the tabular data, without requiring a predefined schema to be available. Furthermore, the size of each document object need not be predetermined, and may vary in accordance with the number of items in the corresponding column. In practice, a maximum document size may be imposed based on system storage and processing limits and/or costs. Feature vector representations of contents of the document objects may comprise features representative of density of items within each document object. For example, features may be computed using a term frequency-inverse document frequency (TF-IDF) algorithm.

In an embodiment of the invention, the unsupervised learning approach comprises computing a distance metric between feature vector representations using an approximate nearest neighbour (ANN) algorithm. The distance metric may be Euclidean distance, and the ANN algorithm may comprise a Bucketed Random Projection (BRP) Locality Sensitive Hashing (LSH) algorithm. These algorithms may advantageously be executed within the distributed computing system.

The step of classifying the new document objects may comprise performing ANN searching across the feature vector representations of the plurality of document objects.

Strategies for transformation and/or storage may be generated by executing a query optimizer within the distributed computing system to determine a physical plan representative of one or more data retrieval queries to be executed on the serving data store. In embodiments of the invention a cost model may be executed within the distributed computing system to determine to identify a lowest-cost physical plan from a plurality of candidate plans.

In embodiments, the strategies for transformation and/or storage may comprise strategies for partitioning data and/or strategies for ordering data within partitions. Advantageously, partitioning of data can reduce the search space for queries of interest, resulting in easier management of searching and improvements in search speed and system response time. Furthermore, providing intelligent data ordering - i.e. item ranking - in each partition of the data space can improve relevancy of search results.

The generated strategies may be stored within a table that maps classifications corresponding with identified clusters to strategies, and the step of retrieving one of the stored strategies may then comprise performing a look-up of the classification of the new document objects in the table.

In a further aspect the invention provides a computer program product comprising a tangible computer-readable medium having program code instructions stored thereon a computer readable medium to execute the method steps according set out above which, when said program is executed by on a computer. That is, the computer program product may be comprising a tangible computer-readable medium having instructions stored thereon which, when executed by a processor implement a method comprising:

transferring a plurality of document objects from a large-scale data store to a distributed computing system;

computing, within the distributed computing system, a corresponding plurality of feature vector representations of contents of the document objects;

grouping, within the distributed computing system, the feature vector representations according to an unsupervised learning approach to identify one or more clusters of similar documents;

for each identified cluster, generating within the distributed computing system least one strategy for transformation and/or storage of associated data;

storing the strategy for transformation and/or storage of associated data for use by a serving data store;

detecting an event comprising the arrival of one or more new document objects into the large-scale data store;

transferring the new document objects from the large-scale data store to the distributed computing system;

computing, within the distributed computing system, a corresponding one or more feature vector representations of contents of the new document objects;

classifying, within the distributed computing system, the new document objects as associated with one of the identified clusters according to the unsupervised learning approach;

retrieving one of the stored strategies for transformation and/or storage of data content of the new document objects based upon the classification; and

executing the retrieved strategy for transformation and/or storage of data content of the new document objects within the serving data store.

In another aspect the invention provides a database system which comprises:

a large-scale data store;

a distributed computing system optimised for processing of big data;

a serving data store; and

a computing apparatus configured to perform data ingestion, the computing apparatus comprising at least one processor, and at least one memory device accessible by the processor,

wherein the memory device contains a body of program instructions that, when executed by the processor, cause the computing apparatus to implement a method comprising steps of: transferring a plurality of document objects from the large-scale data store to the distributed computing system;

computing, within the distributed computing system, a corresponding plurality of feature vector representations of contents of the document objects;

grouping, within the distributed computing system, the feature vector representations according to an unsupervised learning approach to identify one or more clusters of similar documents;

for each identified cluster, generating within the distributed computing system at least one strategy for transformation and/or storage of associated data within a serving data store; storing the strategy for transformation and/or storage of associated data for use by the serving data store;

detecting an event comprising the arrival of one or more new document objects into the large-scale data store;

transferring the new document objects from the large-scale data store to the distributed computing system;

computing, within the distributed computing system, a corresponding one or more feature vector representations of contents of the new document objects;

classifying, within the distributed computing system, the new document objects as associated with one of the identified clusters according to the unsupervised learning approach; retrieving one of the stored strategies for transformation and/or storage of data content of the new document objects based upon the classification; and

executing the retrieved strategy for transformation and/or storage of data content of the new document objects within the serving data store.

Further aspects, advantages, and features of embodiments of the invention will be apparent to persons skilled in the relevant arts from the following description of various embodiments. It will be appreciated, however, that the invention is not limited to the embodiments described, which are provided in order to illustrate the principles of the invention as defined, and to assist skilled persons in putting these principles into practical effect.

Embodiments of the invention will now be described with reference to the accompanying drawings, in which like reference numerals refer to like features, and wherein :

Fig.1 is a block diagram of a prior art system and process for ingestion of structured data.

Fig. 2 is a block diagram illustrating an exemplary distributed system including a data ingestion system embodying the invention.

Fig. 3 is a block diagram illustrating the architecture of a data ingestion system embodying the invention.

Fig. 4 is an illustrated flowchart of a data analysis process implemented by the analytics layer module embodying the invention.

Fig. 5 is an illustrated flowchart of a rules-based data ingestion process embodying the invention.

Fig.6 is a block diagram illustrating information flows within a database system embodying the invention that is configured for use in the travel industry.

Figs.7A to 7D show exemplary table partitioning strategies that may be derived from insights obtained within the system of Figure 6.

[Fig.8] is a chart showing results of a computed distance measure based on an exemplary dataset, for use in an ANN search process embodying the invention.

Figure 2 is a block diagram illustrating an exemplary distributed system 200 including a data ingestion system 202 embodying the invention. In particular, the data ingestion system 202 is configured via suitable programming, and in accordance with principles of the present invention, to carry out analysis and clustering of data based upon data characteristics, to determine, select, and apply data storage strategies directed to optimising performance of applications using the data.

For purposes of illustration, the data ingestion system 202 is shown as comprising a computer system having a conventional architecture. As will become apparent to persons skilled in the art in the course of this description of particular embodiments of the invention, in a practical implementation the data ingestion system 202 may comprise a component of a distributed system for large-scale processing and storage of data. The term "large-scale" relates to a data storage system that contains a volume of data being too large to be effectively handled using storage system conventional technology. To address this, mechanisms are described herein which involve transferring the large scale data from conventional data storage system into a big data platform to extract insights that could not be attained within the conventional data storage system. In practice, data sets on the order of a few tens of gigabytes and above qualify as 'large scale' in the context of the mechanisms described herein.

In order to more clearly describe an exemplary embodiment of the invention, it is convenient initially to consider the data ingestion system 202 as a discrete physical or virtual computing system which comprises a processor 204 which is operably associated with a non-volatile memory/storage device 206, e.g. via one or more data/address busses 208 as shown. The non-volatile storage 206 may be a hard disk drive, and/or may include a solid-state non-volatile memory, such as ROM, flash memory, solid-state drive (SSD), or the like. The processor 204 is also interfaced to volatile storage 210, such as RAM, which contains program instructions and transient data relating to the operation of the data ingestion system 202.

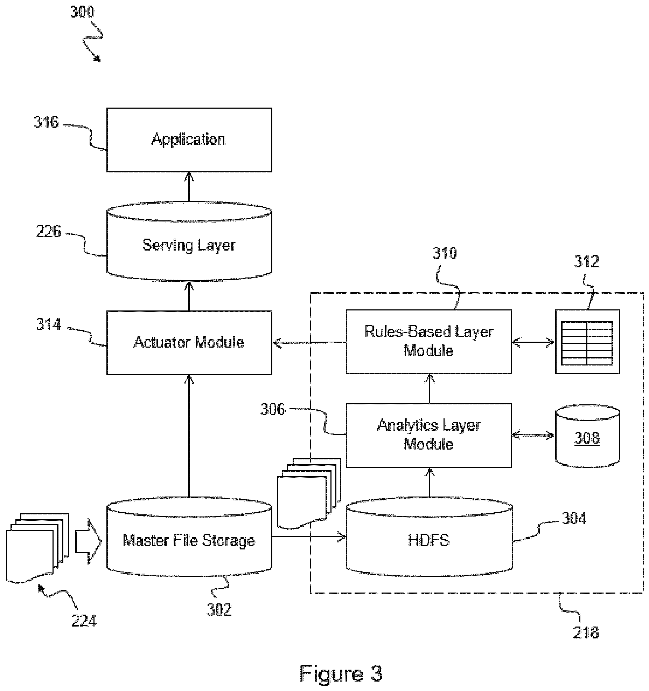

In this configuration, the storage device 206 maintains known program and data content relevant to the normal operation of the data ingestion system 202. For example, the storage device 206 may contain operating system programs and data, as well as other executable application software necessary for the intended functions of the data ingestion system 202. The storage device 206 also contains program instructions which, when executed by the processor 204, cause the data ingestion system 202 to perform operations relating to an embodiment of the present invention, such as are described in greater detail below, with reference to Figures 3 to 6. In operation, instructions and data held on the storage device 206 are transferred to volatile memory 210 for execution on demand.

The processor 204 is also operably associated with a communications interface 212 in a conventional manner. The communications interface 212 facilitates access to a wide-area data communications network, such as the Internet 216.

In use, the volatile storage 210 contains a corresponding body 214 of program instructions transferred from the storage device 206 and configured to perform processing and other operations embodying features of the present invention. The program instructions 214 comprise a technical contribution to the art developed and configured specifically to implement an embodiment of the invention, over and above well-understood, routine, and conventional activity in relation to baggage requirement prediction, as further described below, particularly with reference to Figures 3 to 6.

With regard to the preceding overview of the data ingestion system 202, and other processing systems and devices described in this specification, terms such as 'processor', 'computer', and so forth, unless otherwise required by the context, should be understood as referring to a range of possible implementations of devices, apparatus and systems comprising a combination of hardware and software. This includes single-processor and multi-processor devices and apparatus, including portable devices, desktop computers, and various types of server systems, including cooperating hardware and software platforms that may be co-located or distributed. Physical processors may include general purpose CPUs, digital signal processors, graphics processing units (GPUs), tensor processing units (TPUs), and/or other hardware devices suitable for efficient execution of required programs and algorithms.

Computing systems may include conventional personal computer architectures, or other general-purpose hardware platforms. Software may include open-source and/or commercially-available operating system software in combination with various application and service programs. Alternatively, computing or processing platforms may comprise custom hardware and/or software architectures. For enhanced scalability, computing and processing systems may comprise cloud computing platforms, enabling physical hardware resources to be allocated dynamically in response to service demands. While all of these variations fall within the scope of the present invention, as has already been noted exemplary embodiments may be described herein with illustrative reference to single-processor general-purpose computing platforms configured via deployment of special-purpose software embodying aspects of the invention.

In particular, the terms 'processing unit' and 'module' are used in this specification to refer to any suitable combination of hardware and software configured to perform a particular defined task, such as: receiving, accessing, and processing data or documents; computing feature vectors corresponding with data or documents; performing clustering and/or classification of data or documents based upon feature vector representations; determining, selecting, and applying data storage strategies based upon data or document similarity and/or classification; and so forth. Such processing units or modules may comprise executable code executing at a single location on a single processing device (e.g. data ingestion system 202), or may comprise cooperating executable code modules executing in multiple locations and/or on multiple processing devices

Software components, e.g. program instructions 214, embodying features of the invention may be developed using any suitable programming language, development environment, or combinations of languages and development environments, as will be familiar to persons skilled in the art of software engineering. For example, suitable software may be developed using the C programming language, the Java programming language, the Scala programming language, the C++ programming language, the Go programming language, the Python programming language, the R programming language, and/or other languages suitable for development of code for deployment in conjunction with large-scale data platforms employing technologies such as Hadoop® and Apache Spark®. It will be appreciated by skilled persons, however, that embodiments of the invention involve the implementation of software structures and code that are not well-understood, routine, or conventional in the art of large-scale distributed data storage systems, and that while pre-existing libraries and platform technologies may assist implementation, they require specific configuration and extensive augmentation (i.e. additional code development) in order to realise various benefits and advantages of the invention and implement the specific structures, processing, computations, and algorithms described below, particularly with reference to Figures 3 to 6.

The foregoing examples of languages, environments, platforms, and code libraries are not intended to be limiting, and it will be appreciated that any convenient languages, libraries, platforms, and development systems may be employed, in accordance with system requirements. The descriptions, block diagrams, flowcharts, tables, and so forth, presented in this specification are provided, by way of example, to enable those skilled in the arts of software engineering and machine learning to understand and appreciate the features, nature, and scope of the invention, and to put one or more embodiments of the invention into effect by implementation of suitable software code using any suitable languages, frameworks, libraries and development systems in accordance with this disclosure without exercise of additional inventive ingenuity.

The program code embodied in any of the applications/modules described herein is capable of being individually or collectively distributed as a program product in a variety of different forms. In particular, the program code may be distributed using a computer readable storage medium having computer readable program instructions thereon for causing a processor to carry out aspects of the embodiments of the invention.

Computer readable storage media may include volatile and non-volatile, and removable and non-removable, tangible media implemented in any method or technology for storage of information, such as computer-readable instructions, data structures, program modules, or other data. Computer readable storage media may further include random access memory (RAM), read-only memory (ROM), erasable programmable read-only memory (EPROM), electrically erasable programmable read-only memory (EEPROM), flash memory or other solid state memory technology, portable compact disc read-only memory (CD-ROM), or other optical storage, magnetic cassettes, magnetic tape, magnetic disk storage or other magnetic storage devices, or any other medium that can be used to store the desired information and which can be read by a computer. While a computer readable storage medium may not comprise transitory signals per se (e.g. radio waves or other propagating electromagnetic waves, electromagnetic waves propagating through a transmission media such as a waveguide, or electrical signals transmitted through a wire), computer readable program instructions may be downloaded via such transitory signals to a computer, another type of programmable data processing apparatus, or another device from a computer readable storage medium or to an external computer or external storage device via a network.

Computer readable program instructions stored in a computer readable medium may be used to direct a computer, other types of programmable data processing apparatus, or other devices to function in a particular manner, such that the instructions stored in the computer readable medium produce an article of manufacture including instructions that implement the functions, acts, and/or operations specified in the flowcharts, sequence diagrams, and/or block diagrams. The computer program instructions may be provided to one or more processors of a general purpose computer, a special purpose computer, or other programmable data processing apparatus to produce a machine, such that the instructions, which execute via the one or more processors, cause a series of computations to be performed to implement the functions, acts, and/or operations specified in the flowcharts, sequence diagrams, and/or block diagrams.

Returning to the discussion of Figure 2, the distributed system 200 further comprises a big data platform 218. In exemplary embodiments described herein, the big data platform is based upon Hadoop® Distributed File System (HDFS) for data storage, and Apache Spark® for high-performance processing of data stored within the HDFS storage. Further details of the operation of these exemplary embodiments are disclosed below, in particular with reference to Figure 3. The big data platform 218 is employed in embodiments of the invention to perform processing, analysis, clustering, classification, and matching of data and storage strategies under the control of the data ingestion system 202, although it is not limited to these functions. The big data platform 218 may, for example, also be used for storage and serving of data to applications, and for performing other processing and analysis of data stored within the HDFS storage. Furthermore, in some embodiments, the data ingestion system 202 may itself be implemented within the big data platform 218, e.g. using physical and/or virtual computing resources of the platform 218.

A plurality of data sources, e.g. 220, 222, generate information, which may take the form of structured, semi-structured, and/or unstructured data 224 that are transferred to the big data platform 218. Transmission of the data 224 may be via the Internet 216, or via other public or private communications channels.

The system 200 further includes a serving layer database 226. As will be appreciated, the HDFS storage of the big data platform is able to store a variety of incoming data 224 in structured, semi-structured, and/or unstructured form, i.e. with minimal or no transformation being required. However, data in such a variety of formats is generally not suitable for further processing and analysis. In particular, incoming data is not typically in a form that is optimised for searching and retrieval in response to queries that may be received at the serving layer database 226. Accordingly, transformation (i.e. processing, cleaning, and normalising of the data) is generally required. In embodiments of the invention, such transformation is provided by the data ingestion system, which includes software components (described further in Figures 3 to 5) for generating transformation and storage strategies using functionality provided by the big data platform 218, and for loading the resulting data into the serving layer database 226, from which further processing and analysis can take place. By way of example, the system 200 is also shown as including an application server 228, which may be configured to access the transformed data stored in the serving layer database 226 for further processing and analysis.

Figure 3 is a block diagram 300 illustrating the architecture of a data ingestion system embodying the invention. In the embodiment shown, a master file storage system 302 receives and stores all incoming data 224, some or all of which may subsequently be transferred, individually and/or in batches, to a distributed data store 304 within the big data platform 218. It will be appreciated, however, that other embodiments of the invention may employ alternative storage architectures. For example, the master file storage 302 may be omitted, and incoming data 224 transferred directly to the distributed data store 304. In any case, transferring the incoming information documents 224 to the data store 304 of the big data platform 218 enables processing of the documents to take place within the platform 218. In accordance with embodiments of the invention described herein, the distributed data store 304 is an HDFS store, and processing is carried out using Apache Spark®.

In embodiments of the invention, selected data is transferred from the master file storage system 302 to the distributed data store 304 in the form of document objects. In this context, a document object can comprise aggregated data extracted from a column of tabular incoming data 224. Constructing document objects from columns of tabular data enables processing of unstructured and semi-structured data, in addition to structured data. For example, document objects may be constructed from any columns present in the tabular data, without requiring a predefined schema to be available. Furthermore, the size of each document object need not be predetermined, and may vary in accordance with the number of items in the corresponding column. In practice, a maximum document size may be imposed based on system storage and processing limits and/or costs.

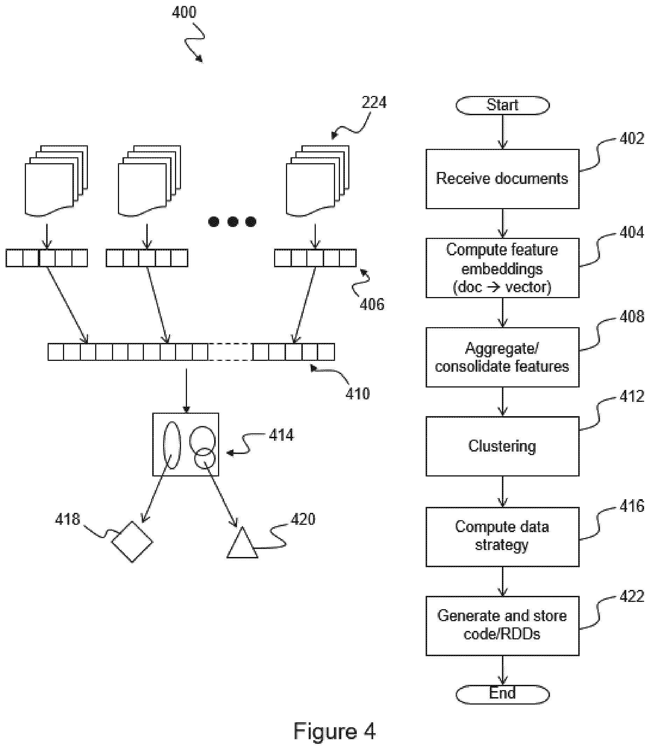

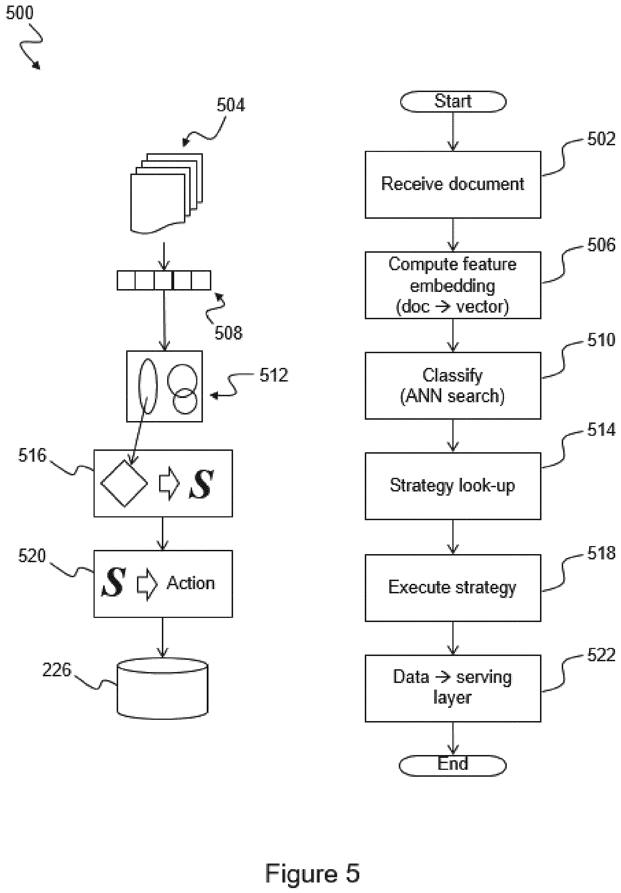

As shown in the block diagram 300, processing of information stored within the HDFS data store 304 is carried out within two main software modules. The first module comprises an analytics layer 306, which implements a process of analysis and clustering of information documents, and generation of associated data storage strategies via process simulation. This process is described in greater detail below with reference to Figure 4. Data resulting from the analysis is stored within a classification database 308. Upon occurrence of a subsequent event, e.g. the arrival of one or more new information documents, the content of the classification database may be used to classify the event according to its similarity to previously analysed events. Such classification enables the second module, which comprises a rules-based layer 310, to look up a corresponding data storage strategy within a mapping table 312, which is populated with strategies previously generated by the analytics layer 306. Further details of the operation of the rules-based layer are described below with reference to Figure 5. The analytics layer 306 and rule-based layer 310 software modules each comprise executable code developed and configured specifically to put embodiments of the invention into effect in accordance with the specific methods set out in greater detail below with reference to Figures 4 and 5, and providing a contribution over and above well-understood, routine, and conventional approaches to data ingestion.

The data ingestion system as represented by the block diagram 300 further includes an actuator module 314. The function of the actuator module 314 is to apply data storage strategies received from the rules-based layer module 310 to information documents stored within the master file storage system 302 in order to populate the serving layer 226. Application of the appropriate strategies ensures that data is stored in the serving layer 226 in a form whereby it may be efficiently accessed for use by applications 316. For example, strategies may provide for partitioning of data and/or for ordering data within partitions. Partitioning of data can have the benefit of reducing the search space for queries received from applications 316, resulting in easier management of searching and improvements in search speed and system response time. Furthermore, providing intelligent data ordering - i.e. item ranking - in each partition of the data space can improve relevancy of search results. Further strategies may comprise generating nested data structures by, for example, aggregating data on one or more selected keys in order to create efficient transformations.

Figure 4 is an illustrated flowchart 400 of a data analysis process implemented by the analytics layer module 306. At step 402, information documents 224 are received by the module 306. The documents may be represented as Java objects, which enable storage and processing within Spark of a wide range of structured, semi-structured, and unstructured information. At step 404, a feature embedding process is employed to generate feature vector representations 406 of the document objects 224. In accordance with an exemplary embodiment of the invention, features are generated from numerical data values using counters, e.g. via a count vectorizer algorithm, while features are generated from categorical data values using a term-frequency-inverse-document-frequency (TF-IDF) algorithm. At step 408, features representing pluralities of related documents (e.g. documents from a common source, and/or having a common format or content) are aggregated (e.g. averaged, or otherwise pooled) and/or concatenated to form aggregate vectors 410.

At step 412, the resulting vectors are grouped 414 using clustering techniques. In particular, in an exemplary embodiment unsupervised document classification is determined by evaluating a distance measure between corresponding document vectors, with 'closer' documents being considered more similar, and thus likely to benefit from similar data processing and storage strategies. Specifically, an exemplary embodiment employs Spark's Locality Sensitive Hashing (LSH) API to perform approximate nearest neighbour (ANN) searching across the document vectors in order to identify similar documents. Where the distance measure is Euclidean distance, a Bucketed Random Projection (BRP) LSH algorithm is employed to perform the ANN searching.

At step 416, data strategies 418, 420 are computed corresponding with the identified document clusters 414. Within Spark®, data strategies may be computed using the Catalyst optimizer of Spark SQL. This optimization process commences with a relation to be computed which, in embodiments of the invention, may be an SQL query representing data to be extracted from the master file storage 302 to the serving layer 226 by the actuator module 314. The query is parsed to generate an abstract syntax tree (AST), from which an unresolved logical plan is generated. Spark SQL uses Catalyst rules and a Catalog object that tracks the tables in all data sources to resolve unresolved attributes and generate a logical plan, which is optimized and then used to generate one or more physical plans, using physical operators that match the Spark® execution engine. A cost model can then be employed to identify a lowest-cost physical plan. The optimizer can then generate code and Resilient Distributed Datasets (RDDs) 422 for efficient storage and analysis of the data. The generated physical plans and RDDs represent optimized data transformation and storage strategies determined by the Catalyst optimizer which can be used as the basis for corresponding strategies for data transformation and storage within the serving layer 226, i.e. outside the big data platform 218. In this way, embodiments of the invention employ functionality of the big data platform 218 to perform data analysis and obtain insights and strategies that can then be deployed outside the platform 218, such as within a legacy database system represented by the serving layer 226.

Figure 5 is an illustrated flowchart of a process executed by the analytics layer module 306, rules-based layer module 310, and actuator module 314. At step 502, a new document object 504 is received by the analytics layer module 306, which generates 506 a corresponding document embedding vector 508, according to the methods previously described in relation to step 404 shown in Figure 4. At step 510, the analytics layer module classifies the new document object by conducting an ANN search via the Spark® LSH API to identify the existing cluster 512 with which the document is most closely associated. This classification is used to identify an associated action, which is passed to the rules-based layer. The rules-based layer module 310 then looks up 514 a corresponding data strategy in its mapping table 516. The identified strategy is actioned 518 by the actuator module 314, resulting in execution 520 of data transformations, such as partitioning and/or ordering of data tables for storage within the serving layer 226. Consequently, data is ingested 522 from the master file storage 302 into the serving layer storage 226.

As mentioned above, incoming data 224 may exist in the form of tabular data such as filing fare data sample of table 700. Thus, the incoming data 224 comprises a set of columns. As also explained, similarities of the tabular incoming data 224 may be determined by way of the aforementioned mechanism such as the ANN searching. This may result in distance measures based on sets of columns in order to identify the existing cluster(s) 512 with which the incoming tabular data 224 is most closely associated. This is illustrated in the following by an example with three documents having multiple data records.

The first document may be represented by a table as follows:

| airline | city-origin | city-destination | zone |
|---------|-------------|------------------|------|
| AF | PARIS | NEW YORK | 3 |
| AF | LONDON | ROME | 2 |

A document vector is generated over the ordered set of columns, namely "city-origin", "city-destination" and "zone". The sub-vectors for these columns may be:

$$V\text{-}1\text{-}1\ (PARIS + LONDON) = [0.3, 0.1, 0.6, 0.4];$$

$$V\text{-}1\text{-}2\ (NEW\ YORK + ROME) = [0.1, 0.2, 0.7, 0.3],$$

$$V\text{-}1\text{-}3\ ("3" + "2") = [0.6, 0.2, 0.1, 0.2];$$

The overall document vector V-1 is given by a concatenation of the column-wise sub-vectors and reads as:

$$V\text{-}1 = [0.3, 0.1, 0.6, 0.4, 0.1, 0.2, 0.7, 0.3, 0.6, 0.2, 0.1, 0.2];$$

The second document may be represented by a further table, namely:

| airline | city-origin | city-destination | zone |
|---------|-------------|------------------|------|
| LH | BOSTON | ROME | 3 |
| LH | ROME | BERLIN | 1 |

The resulting concatenated document vector V-2 may be for the second document:

$$V\text{-}2 = [0.5, 0.5, 0.6, 0.1, 0.1, 0.1, 0.7, 0.3, 0.1, 0.2, 0.1, 0.2]$$

The third document may be:

| airline | city-origin | city-destination | zone |
|---------|-------------|------------------|------|
| UA | PARIS | NICE | 3 |
| UA | LONDON | ROME | 2 |

The resulting concatenated document vector V-3 may be for the third set of columns:

$$V\text{-}3 = [0.3, 0.1, 0.6, 0.4, 0.1, 0.2, 0.7, 0.3, 0.6, 0.2, 0.1, 0.1]$$

When a similarity test on the vectors V-1, V-2 and V-3 is carried out using e.g. the ANN algorithm, the result may be that the first and the third set of columns turn out to be very similar with an Euclidean distance of 0.1, which results only from a numerical difference between the last values of the vectors V-1 and V-3. For example, the first document with its vector V1 may already be associated to one of the existing cluster(s) 512, so the third document (being incoming data) with its document vector V-3 will consequently be associated to the same cluster(s) and the corresponding optimized data processing and storage strategies already developed for the(se) cluster(s) can be applied to the third document, resulting in an overall optimized process flow for the third document. The second document with its vector V-2, however, will not be associated to the cluster(s) where the first document is already associated to, since the Euclidean distance between the vector V-1 and V-2 is too large (e.g. above a given distance threshold).

Based on these mechanisms, transforming the incoming tabular data 224 into processed data tables 618 may be performed by partitioning the incoming data 224 using the generated transformation strategies 614, including aggregation keys, whereby the aggregation keys have been created by strategies as aforementioned and which may comprise generating nested data structures by, for example, aggregating data on one or more selected keys in order to create transformations. The processed data tables 618 obtained e.g. by partitioning may constitute a data representation to efficiently process queries e.g. to generate ranked results with a minimum of further joins, partitioning, and/or sorting of data.

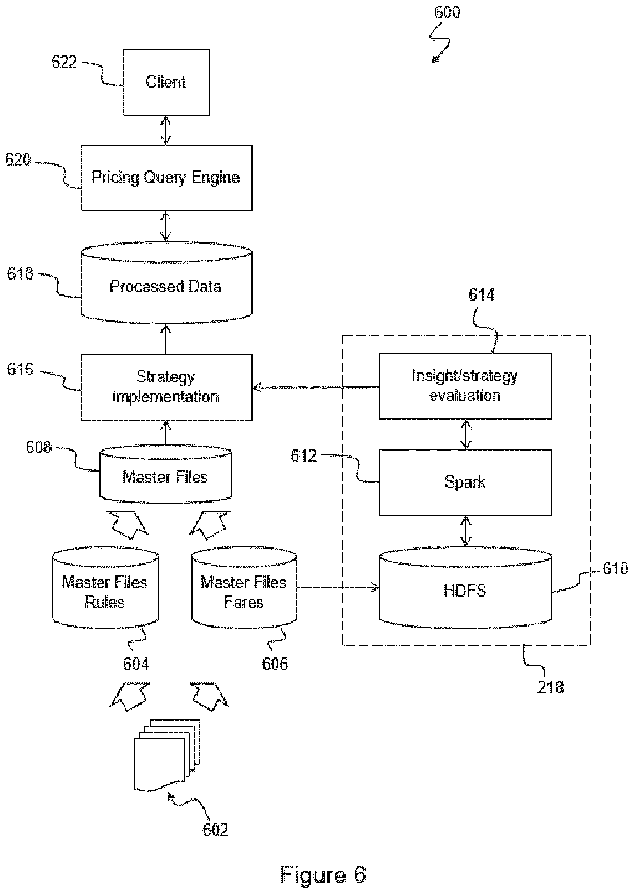

By way of a more specific example, Figure 6 is a block diagram 600 illustrating information flows within a database system embodying the invention that is configured for use in the travel industry. In particular, this exemplary system may embody a Global Distribution System (GDS), which is a Computer Reservation System (CRS) that is capable of booking and selling tickets for services offered by multiple travel service providers. Existing GDS implementations are generally based on relational database management systems (RDBMS), which interface with numerous travel service providers, agents, web service providers, and end user applications. It is therefore not generally practical to migrate legacy GDS databases to modern big data platforms based on technologies such as HDFS and Spark®. At the same time, however, these legacy systems manage large quantities of data, and are often incapable of analysing and ingesting new data in real time, which may lead to timeouts, errors, and/or delays in providing up-to-date search results and travel pricing options to users. However, by employing an embodiment of the present invention these difficulties may be alleviated.

As shown in Figure 6, 'raw' data 602 is transmitted by travel service providers, such as airlines, to the GDS, where it is stored in master file databases comprising rules 604 and fare information 606. The rules and fare information may also be aggregated into a single master files database 608. In order to analyse incoming raw data 602, and determine strategies for transforming it so that it can be more efficiently and reliably searched and retrieved in response to queries received by the GDS, document objects are constructed from the data in the master fare information database 606 and transferred to the big data platform 218. In the embodiment 600, the document objects are stored within the HDFS layer 610 and processed within the distributed computing environment, e.g. Spark® 612, to generate insights and transformation/storage strategies 614, as described in greater detail above with reference to Figure 5. Optimized strategies are reinjected to the RDBMS as actionable data that can be implemented 616 to transform master file data tables 608 into processed data tables 618 suitable for efficient search and retrieval by a pricing query engine 620 in response to queries received from client applications (e.g. end users) 622.

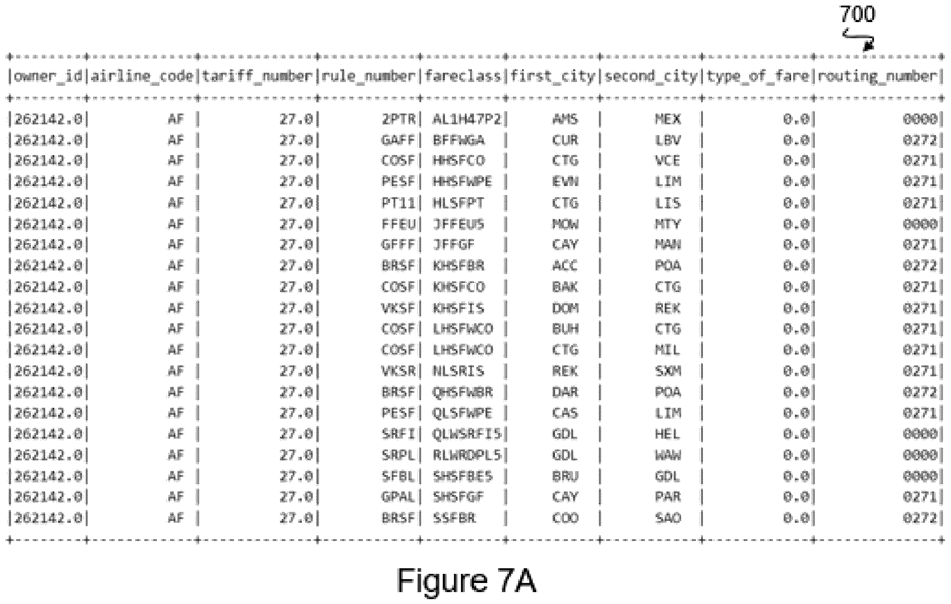

To further illustrate the kind of actionable insights that can be generated by embodiments of the invention, Figures 7A-D show exemplary table partitioning strategies that may be derived from the system represented by the block diagram 600 of Figure 6. The table 700 (Figure 7A) represents a small sample of fare data from a filing by a single airline, which in this case is Air France (airline code AF). From this data sample it can be seen that the schema of the fare master file comprises: owner ID; airline (i.e. carrier) code (e.g. 'AF'); tariff number; rule number; fare class; first city (i.e. flight origin city); second city (i.e. flight destination city); type of fare; and routing number. Large volumes of this type of data must be maintained by a GDS, received from multiple carriers. The GDS is further required to respond rapidly to pricing queries received from client applications, to provide lists of ranked options for itineraries and fares meeting requested customer travel requirements. In practice, the master file tables (e.g. 700) may be extremely large, and not optimally structured for pricing searches and ranking. However, by using insights and strategies derived from rapid analysis within the big data system 218, master file data 608 may be efficiently transformed into processed data tables 618 that are more suitable for use in queries generated through the pricing query engine 620.

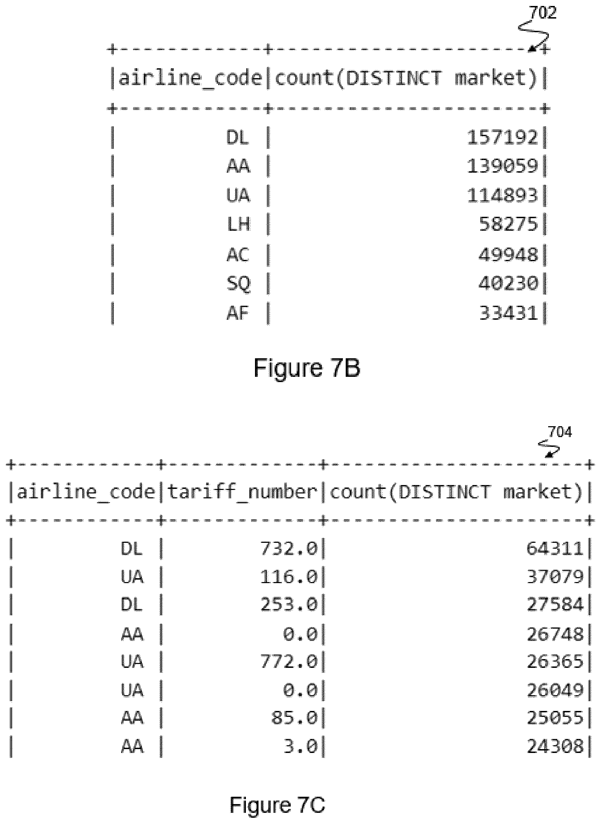

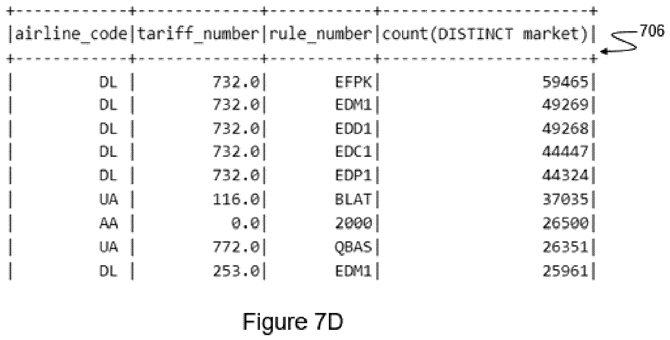

In one example, the transformation may comprise partitioning the data using two or more aggregation keys. Table 702 (Figure 7B) illustrates the impact of partitioning data based on 'market', which is an aggregation of origin and destination cities, i.e. first city and second city columns in table 700. The resulting partitions by airline code vary in size, in this example, from around 33,000 up to around 157,000 items. The effect of further partitioning by tariff_number is shown in table 704 (Figure 7C), where the exemplary partitions now vary in size up to about 64,000 items. Table 706 (Figure 7D) illustrates further partitioning by rule_number, whereby the maximum partition size is now just under 60,000 items.

Using these principles, various pre-processed, i.e. joined, partitioned, and/or ordered, tables may be stored in the processed data store 618 for use by the pricing query engine 620. The insights necessary to determine the optimized form of pre-processed data are obtained using functionality of the big data platform 218, which can be applied as described above with reference to Figure 4 to analyse queries representative of those generated by the pricing query engine 620 and generate corresponding logical and physical plans. These plans reveal how the query planner within the big data platform (e.g. using the Catalyst optimizer of Spark SQL) would select, partition, and order data when executing such queries. This information is used to generate strategies to pre-process master file data 608 into joined, partitioned, and/or ordered tables stored in the processed data store 618. Accordingly, when a query is executed by the pricing query engine 620, the data is already in a form whereby the query may be implemented efficiently to generate ranked results with a minimum of further joins, partitioning, and/or sorting of data.

Additionally, a particular advantage of embodiments of the invention is the ability to manage ingestion of previously unseen and/or anomalous data storage events. To demonstrate this ability, an embodiment of the invention as illustrated in Figure 6 has been applied to an exemplary dataset comprising filing information documents (i.e. pricing and availability information) of six airlines, namely Delta (DL), United Airlines (UA), Singapore Airlines (SQ), Qatar Airways (QA), British Airways (BA), and Air France (AF). A useful test of the effectiveness of such an embodiment of the invention is to show that it is able to distinguish effectively between filing events, and therefore to select and apply appropriate data strategies.

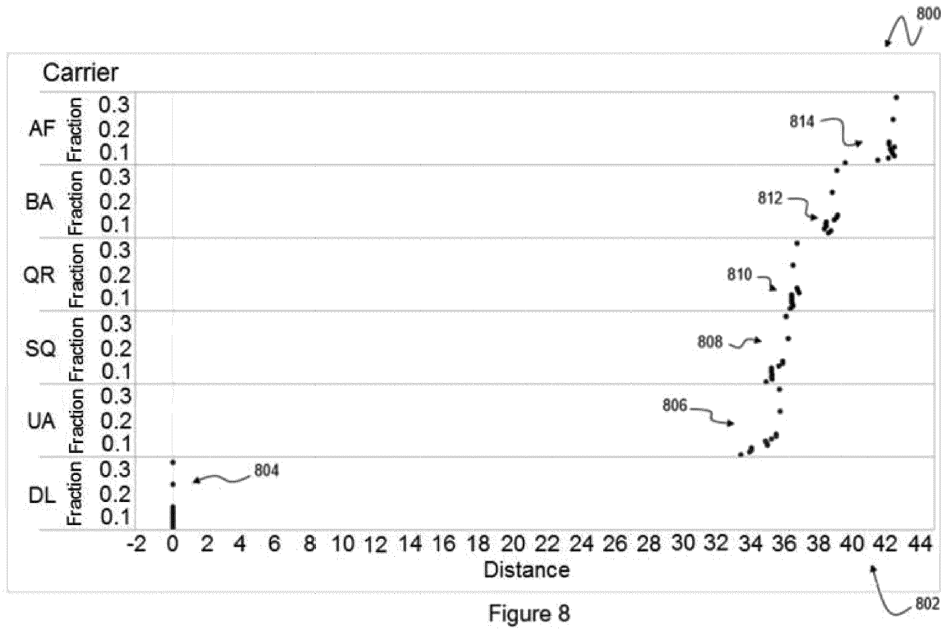

Figure 8 is a chart 800 showing results of a computed Euclidean distance measure of the six airline filings relative to the DL filings. The horizontal axis 802 represents the Euclidean distance, while the results for the six filing groups are separated vertically. Data points in each of the six groups represent different proportions of the complete available dataset used to compute the aggregated feature embedding vectors, up to a maximum of 30% (limited, in this exemplary case, by available computing resources). The bottom group 804 represents the DL filings, which (by definition) have a relative distance of zero. For the purposes of this example, DL was chosen as a reference because it is a known anomaly, having different characteristics to the filings of the other airlines. The other airlines' filings have somewhat similar characteristics to one another, and are therefore clustered within a relatively small range of distances from the DL reference. In order of distance and progressing vertically, the chart 800 shows the distance measures for UA 806, SQ 808, QR 810, BA 812, and AF 814. It is notable that the distances generally increase with increasing quantity of data, which is consistent with the expectation that more data enables differences emerge more clearly, although it appears that the distances have substantially stabilised after processing just 30% of the full dataset.

The results in Figure 8 confirm the ability of embodiments of the invention to distinguish significantly outlying or anomalous data events using a clustering approach based on feature embeddings of the content of document objects comprising a range of unstructured, semi-structured, and structured data. Events corresponding with, or sufficiently similar to, previously identified events can be identified based on a distance measure, e.g. through the use of an ANN algorithm, such that associated data analysis and storage strategies can be employed in the course of data ingestion to make relevant data available to applications via a serving layer in an efficient and timely manner.

It should be appreciated that while particular embodiments and variations of the invention have been described herein, further modifications and alternatives will be apparent to persons skilled in the relevant arts. In particular, the examples are offered by way of illustrating the principles of the invention, and to provide specific methods and arrangements for putting those principles into effect. In general, embodiments of the invention comprise the provision of technical arrangements for data ingestion whereby information documents comprising unstructured, semi-structured, and/or structured data are processed within a large-scale data platform. In particular, feature vector representations of document contents are computed and grouped according to an unsupervised learning approach to identify clusters of similar documents. For each document cluster, one or more data strategies is generated for storage of corresponding data within a serving storage layer, which may be accessed and further processed by external applications. Upon processing of subsequent data events, e.g. the arrival of new information documents to the large-scale data platform, one or more corresponding feature vector representations of the new document contents may be generated, and classified in accordance with previously identified clusters to determine an appropriate strategy for ingestion of the new data. Advantageously, such embodiments are able to autonomously handle ingestion of new information documents based upon characteristics of the document contents that are captured by the feature vector representations, such that suitable actions may be selected based upon past events, thereby reducing the need for manual intervention in data ingestion and transformation.

With the foregoing in mind, the described embodiments should be understood as being provided by way of example, for the purpose of teaching the general features and principles of the invention, but should not be understood as limiting the scope of the invention.

**Claims**

1. A method of data ingestion for use in a large-scale database system which comprises:

retrieving a plurality of document objects from a large-scale data store;
computing a corresponding plurality of feature vector representations of contents of the document objects;
grouping the feature vector representations according to an unsupervised learning approach to identify one or more clusters of similar documents;
for each identified cluster, generating and storing at least one strategy for transformation and/or storage of associated data within a serving data store;
detecting an event comprising the arrival of one or more new document objects into the large-scale data store;

computing a corresponding one or more feature vector representations of contents of the new document objects; classifying the new document objects as associated with one of the identified clusters according to the unsupervised learning approach; retrieving one of the stored strategies for transformation and/or storage of data content of the new document objects based upon the classification; and executing the retrieved strategy for transformation and/or storage of data content of the new document objects within the serving data store.

2. The method of claim 1 wherein computing feature vector representations of document objects, identifying clusters of similar documents, generating strategies for transformation and/or storage of associated data, and classifying new document objects, are implemented within a distributed computing system that is optimised for processing of big data.

3. The method of claim 1 or claim 2 wherein executing the retrieved strategy for transformation and/or storage of data content of the new document objects within the serving data store is implemented within a legacy database system.

4. The method of any one of claims 1 to 3 wherein each one of the plurality of document objects comprises aggregated data extracted from a column of tabular data.

5. The method of claim 4 wherein the feature vector representations of contents of the document objects comprise features representative of density of items within each document object.

6. The method of claim 5 wherein one or more feature values are computed using a term frequency-inverse document frequency algorithm.

7. The method of any one of claims 1 to 6 wherein the unsupervised learning approach comprises computing a distance metric between feature vector representations using an approximate nearest neighbour, ANN, algorithm.

8. The method of claim 7 wherein the distance metric is Euclidean distance, and the ANN algorithm comprises a Bucketed Random Projection Locality Sensitive Hashing algorithm.

9. The method of claim 7 or claim 8 wherein classifying the new document objects comprises performing ANN searching across the feature vector representations of the plurality of document objects.

10. The method of any one of claims 1 to 9 wherein the strategies for transformation and/or storage are stored within a table that maps classifications corresponding with identified clusters to strategies, and the step of retrieving one of the stored strategies comprises performing a look-up of the classification of the new document objects in the table.

11. The method of any one of claims 1 to 10 wherein the strategies for transformation and/or storage comprise strategies for partitioning data.

12. The method of claim 11 wherein the strategies for transformation and/or storage comprise strategies for ordering data within partitions.

13. A database system for data ingestions which comprises:

a large-scale data store;
a distributed computing system optimised for processing of big data;
a serving data store; and
a computing apparatus configured to perform data ingestion, the computing apparatus comprising at least one processor, and at least one memory device accessible by the processor,
wherein the memory device contains a body of program instructions that, when executed by the processor, cause the computing apparatus to implement a method comprising steps of:

transferring a plurality of document objects from the large-scale data store to the distributed computing system;
computing, within the distributed computing system, a corresponding plurality of feature vector representations of contents of the document objects;

grouping, within the distributed computing system, the feature vector representations according to an unsupervised learning approach to identify one or more clusters of similar documents;

for each identified cluster, generating within the distributed computing system at least one strategy for transformation and/or storage of associated data;

storing the strategy for transformation and/or storage of associated data for use by the serving data store;

detecting an event comprising the arrival of one or more new document objects into the large-scale data store;

transferring the new document objects from the large-scale data store to the distributed computing system;

computing, within the distributed computing system, a corresponding one or more feature vector representations of contents of the new document objects;

classifying, within the distributed computing system, the new document objects as associated with one of the identified clusters according to the unsupervised learning approach;

retrieving one of the stored strategies for transformation and/or storage of data content of the new document objects based upon the classification; and

executing the retrieved strategy for transformation and/or storage of data content of the new document objects within the serving data store.

**14.** A computer program product comprising program code instructions stored on a computer readable medium to execute the method steps according to any one of the claims 1 to 12 when said program is executed on a computer.

Figure 1 (Prior Art)

Figure 2

Figure 3

400

224

406

410

414

418

420

Start

Receive documents — 402

Compute feature
embeddings
(doc → vector) — 404

Aggregate/
consolidate features — 408

Clustering — 412

Compute data
strategy — 416

Generate and store
code/RDDs — 422

End

Figure 4

500

504

508

512

516

520

226

Start

Receive document — 502

Compute feature
embedding
(doc → vector) — 506

Classify
(ANN search) — 510

Strategy look-up — 514

Execute strategy — 518

Data → serving
layer — 522

End

Figure 5

Figure 6

| owner_id | airline_code | tariff_number | rule_number | fareclass | first_city | second_city | type_of_fare | routing_number |
|---|---|---|---|---|---|---|---|---|
| 262142.0 | AF | 27.0 | 2PTR | AL1H47P2 | AMS | MEX | 0.0 | 0000 |
| 262142.0 | AF | 27.0 | GAFF | BFFWGA | CUR | LBV | 0.0 | 0272 |
| 262142.0 | AF | 27.0 | COSF | HHSFCO | CTG | VCE | 0.0 | 0271 |
| 262142.0 | AF | 27.0 | PESF | HHSFWPE | EVN | LIM | 0.0 | 0271 |
| 262142.0 | AF | 27.0 | PT11 | HLSFPT | CTG | LIS | 0.0 | 0271 |
| 262142.0 | AF | 27.0 | FFEU | JFFEU5 | MOW | MTY | 0.0 | 0000 |
| 262142.0 | AF | 27.0 | GFFF | JFFGF | CAY | MAN | 0.0 | 0271 |
| 262142.0 | AF | 27.0 | BRSF | KHSFBR | ACC | POA | 0.0 | 0272 |
| 262142.0 | AF | 27.0 | COSF | KHSFCO | BAK | CTG | 0.0 | 0271 |
| 262142.0 | AF | 27.0 | VKSF | KHSFIS | DOM | REK | 0.0 | 0271 |
| 262142.0 | AF | 27.0 | COSF | LHSFWCO | BUH | CTG | 0.0 | 0271 |
| 262142.0 | AF | 27.0 | COSF | LHSFWCO | CTG | MIL | 0.0 | 0271 |
| 262142.0 | AF | 27.0 | VKSR | NLSRIS | REK | SXM | 0.0 | 0271 |
| 262142.0 | AF | 27.0 | BRSF | QHSFWBR | DAR | POA | 0.0 | 0272 |
| 262142.0 | AF | 27.0 | PESF | QLSFWPE | CAS | LIM | 0.0 | 0271 |
| 262142.0 | AF | 27.0 | SRFI | QLWSRFI5 | GDL | HEL | 0.0 | 0000 |
| 262142.0 | AF | 27.0 | SRPL | RLWRDPL5 | GDL | WAW | 0.0 | 0000 |
| 262142.0 | AF | 27.0 | SFBL | SHSFBE5 | BRU | GDL | 0.0 | 0000 |
| 262142.0 | AF | 27.0 | GPAL | SHSFGF | CAY | PAR | 0.0 | 0271 |
| 262142.0 | AF | 27.0 | BRSF | SSFBR | COO | SAO | 0.0 | 0272 |

Figure 7A

EP 3 771 992 A1

702

```
+-------------+------------------------+
|airline_code|count(DISTINCT market)|
+-------------+------------------------+
|         DL |                157192|
|         AA |                139059|
|         UA |                114893|
|         LH |                 58275|
|         AC |                 49948|
|         SQ |                 40230|
|         AF |                 33431|
```

Figure 7B

704

```
+-------------+---------------+------------------------+
|airline_code|tariff_number|count(DISTINCT market)|
+-------------+---------------+------------------------+
|         DL |          732.0|                 64311|
|         UA |          116.0|                 37079|
|         DL |          253.0|                 27584|
|         AA |            0.0|                 26748|
|         UA |          772.0|                 26365|
|         UA |            0.0|                 26049|
|         AA |           85.0|                 25055|
|         AA |            3.0|                 24308|
```

Figure 7C

```
+------------+-------------+------------+----------------------+
|airline_code|tariff_number|rule_number|count(DISTINCT market)|       706
+------------+-------------+------------+----------------------+
|         DL |       732.0|        EFPK|                 59465|
|         DL |       732.0|        EDM1|                 49269|
|         DL |       732.0|        EDD1|                 49268|
|         DL |       732.0|        EDC1|                 44447|
|         DL |       732.0|        EDP1|                 44324|
|         UA |       116.0|        BLAT|                 37035|
|         AA |         0.0|        2000|                 26500|
|         UA |       772.0|        QBAS|                 26351|
|         DL |       253.0|        EDM1|                 25961|
```

Figure 7D

Figure 8

Europäisches
Patentamt

European
Patent Office

Office européen
des brevets

**EUROPEAN SEARCH REPORT**

Application Number

EP 20 18 8585

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2018/075115 A1 (MURRAY GLENN ALLEN [US] ET AL) 15 March 2018 (2018-03-15)<br>* figures 1-3A,6A *<br>* paragraphs [0007] - [0009] *<br>* paragraphs [0035] - [0043], [0051] *<br>* paragraphs [0136] - [0154] *<br>* paragraphs [0123], [0204] *<br>----- | 1-14 | INV.<br>G06F16/25 |
| | | | TECHNICAL FIELDS SEARCHED (IPC) |
| | | | G06F |

The present search report has been drawn up for all claims

| Place of search | Date of completion of the search | Examiner |
|---|---|---|
| Munich | 23 November 2020 | Michalski, Stéphane |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

                                       
& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 20 18 8585

This annex lists the patent family members relating to the patent documents cited in the above-mentioned European search report.
The members are as contained in the European Patent Office EDP file on
The European Patent Office is in no way liable for these particulars which are merely given for the purpose of information.

23-11-2020

| Patent document cited in search report | Publication date | Patent family member(s) | Publication date |
|---|---|---|---|
| US 2018075115 A1 | 15-03-2018 | US 2018075115 A1<br>US 2020210417 A1 | 15-03-2018<br>02-07-2020 |

EPO FORM P0459

For more details about this annex : see Official Journal of the European Patent Office, No. 12/82